# EUROPEAN PATENT SPECIFICATION

(11) **EP 1 953 119 B1**
(45) Date of publication and mention of the grant of the patent: **22.07.2009**
(21) Application number: 08150215.5
(22) Date of filing: 14.01.2008
(51) Int. Cl.: C02F 1/52, C02F 1/28, C02F 1/56

(54) **Water purification composition**
Wasserreinigungszusammensetzung
Composition de purification de l'eau

(30) Priority: 01.02.2007 IN MU01862007; 28.03.2007 EP 07105097
(43) Date of publication of application: 06.08.2008
(73) Proprietor: Unilever N.V., 3013 AL Rotterdam (NL); Unilever PLC, London EC4Y 0DY (GB)
(72) Inventor: Mahapatra, Samiran, 560 066 Whitefield, Bangalore (IN); Sarkar, Ayan, 560 066 Whitefiled, Bangalore (IN)
(74) Representative: Rosen Jacobson, Frans Lucas M.

(56) References cited:
- JP-A- 2005 058 987
- US-A1- 2004 026 657
- US-A1- 2004 164 029
- US-A1- 2005 242 043
- US-B1- 6 461 535

## Description

### FIELD OF THE INVENTION

The invention relates to a water purification composition. The invention particularly relates to a water purification composition that is especially useful for removal of trace quantities of harmful contaminant like Arsenic in addition to removal of microorganisms like virus, bacteria and cyst to make the water suitable for human consumption.

### BACKGROUND AND PRIOR ART

A large population of people in the world live in developing and under-developed countries where there is a severe shortage of hygienic potable water. A high percentage of these people live in rural areas where there are no water purification systems like the ones provided by urban municipal drinking water treatment plants. Many people have to depend directly on ground and/or underground water sources like wells, tube-wells, ponds and rivers. Often these water sources are contaminated by sewage, industrial and agricultural wastes.

The various types of water purification systems available like those that utilize UV radiation, halogenated resins, reverse osmosis etc are not very convenient to use in these rural areas since they either require running water and / or electricity or are too expensive for the consumers. Hence many people in the rural areas resort to boiling of water to kill the pathogenic microorganisms in their drinking water. This is also often not feasible since boiling requires large amount of fuel which is increasing becoming scarce. Further there are many areas in the world which are naturally contaminated with high amounts of inorganic impurities like Arsenic. Arsenic is an extremely harmful contaminant. People continue to ingest water with these high levels of microorganisms and impurities like Arsenic which are responsible for the high mortality and morbidity in these areas.

Arsenic is one of the most toxic contaminants found in the environment. Arsenic is found in soils, rocks, natural waters and organisms. Arsenic is the twentieth most abundant element in earth's crust. The most common oxidation states of arsenic are +3 and +5. Among all the arsenic compounds present in the environment, of particular interest is arsenite (which is arsenic in the As (III) form, which is 25-50 times more toxic than arsenate (which is arsenic in As (V) form) and 70 times more toxic than the methylated species, dimethylarsinate (DMA) and monomethylarsonate(MMA). These facts indicate why it would be of priority interest to develop technologies for the removal of As (III), from drinking water.

Inorganic arsenic is identified as a group-I carcinogen for humans. More than 100 million people are affected worldwide due to arsenic contaminated drinking water. Drinking water in many of these areas have arsenic content as high as 300 parts per billion (ppb). The WHO and USEPA recommended MCL (maximum contaminant limit) of arsenic in drinking water is 10 ppb. Available arsenic removal technologies are membrane separation, ion exchange and adsorption. These technologies either require expensive equipments which are not affordable in many parts of the world or are not successful in removing arsenic, especially arsenic in the As (III) to the WHO recommended specification. Further, boiling of water, which many people resort to for purification of water, does not remove arsenic. Thus, one of the major challenges in this field is poor removal of arsenic (111). Additionally, while arsenic in the purified water has to meet these stringent requirements, the technology should also ensure removal of harmful micro organisms like cysts, bacteria and virus to a level which is safe for people to consume. According to EPA, water from any unknown origin can be rendered microbiologically safe to drink if removal of log 6 of bacteria, log 4 of virus and log 3 of cysts is attained. Thus a generally accepted removal criteria for bacteria, virus and cysts are log 6, log 4 and log 3 removal respectively.

A large number of chemical methods of purifying water have been known and used at municipal, local and domestic levels. The chemicals include coagulants and flocculants to precipitate the suspended and dissolved impurities and biocides for killing microorganisms.

WO02/00557 (Proctor and Gamble) describes a water purification composition along with a nutrient additive as apart from purifying and clarifying drinking water, a need was felt in many parts of the world to improve standards of nutrition and health. The composition disclosed comprises essentially a primary coagulant, a bridging flocculent and a coagulant aid. Although this publication claims to remove arsenic, the present inventors have found that further improvement in the technology is required to meet the stringent WHO standards for safe drinking water.

Titanium dioxide has been used for removal of Arsenic from water. US6919029 (2005) by Stevens Institute of Technology teaches use of specific form of titanium dioxide for improved Arsenic removal. The present inventors have found that mere use of titanium dioxide alone does not provide for the near complete removal of arsenic.

JP2005058987 discloses compositions for waste water purification containing nine components viz. calcium sulphate, aluminium sulphate, silica, soda, polymeric flocculant, talc, zeolite, activated carbon and titanium oxide. This patent application describes detoxification of waste sludge water using titanium oxide as a photocatalyst. The present inventors have found that this composition is not suitable for purification of raw water to meet the criteria for potable water set by WHO and other health agencies.

The present inventors have worked diligently on solving this problem. They found that the use of adsorbents like titanium dioxide in a flocculation formulation, although providing improvement in the removal of Arsenic (V) compounds from water, are not able to meet the removal requirement of the more toxic and more difficult to remove Arsenic (III) compounds. They then worked on several fronts to solve this problem and found that use of certain selective biocides solve the problem of removal of all arsenic compounds to meet the stringent WHO standards. In addition, the selective biocides ensure sufficient removal of microorganisms.

It is thus an object of the present invention to provide for a water purification composition that solves most of the problems encountered when using compositions reported in the past. It is another object of the present invention to provide for a water purification composition that provides purified water with low Arsenic content that meets the WHO standards of less than 10 ppb, especially Arsenic (III) compounds. It is yet another object of the present invention to provide for a water purification composition that also meets the high microbiological removal standards of 6 log bacteria, 4 log virus and 3 log cysts.

### SUMMARY OF THE INVENTION

According to one aspect of the present invention there is provided a water purification composition comprising
(a) a coagulating agent which is a water soluble inorganic metal salt having trivalent cation;
(b) a flocculating agent which is a high molecular weight water soluble polymer;
(c) an adsorbent which is a water insoluble oxide, hydroxide or oxo-hydroxides of titanium, zirconium, iron, copper or zinc; and
(d) a biocide which is a halogen compound.

It is particularly preferred that the absorbent is titanium dioxide or iron oxo-hydroxide.

According to a preferred aspect of the invention there is provided a water purification composition comprising two portions which are spatially separated wherein the first portion comprises the biocide and the second portion comprises the flocculating agent and the coagulating agent.

### DETAILED DESCRIPTION OF THE INVENTION

All parts herein are by weight unless otherwise specified.

The water purification composition of the present invention comprises a coagulating agent, a flocculating agent, a selective adsorbent and a selective biocide.

The coagulating agent is a compound which is a water-soluble inorganic metal salt having trivalent cation. Suitable trivalent cations are Al³⁺ and Fe³⁺. The coagulant is generally free from carbon atoms. Examples of coagulating agents are ferric sulfate, aluminium sulfate and polyaluminium chloride. Without being limited by theory, it is believed that these coagulating agents when added to water form gelatinous hydroxide compounds at pH greater than or equal to 6. The mechanism of coagulation via the formation of gelatinous hydroxide is optimum when pH is adjusted between 6 and 8.5. The gelatinous precipitate entrains fine suspended particles and microbes as it settles or coagulates. The coagulating agent is preferably present in an amount in the range of from 5 to 50%, more preferably from 15 to 40% by weight of the composition.

The flocculating agent as per this invention is a compound which is a high molecular weight water soluble polymer. Examples of flocculating agents are polysaccharides (dextane celluloses), proteins, modified celluloses (hydroxyethyl/hydroxypropyl or carboxymethyl), and polyacrylamides preferably high molecular weight polyacrylamide. It is especially preferred that the polyacrylamide is either anionic or non-ionically modified, more preferably anionically modified. Suitable molecular weights of these polyacrylamides are in the range of 10⁵ to 10⁷. Preferred flocculating agent is Superfloc (from Cytec). Preferred amounts of the flocculating agent is from 0.5 to 15%, more preferably from 1 to 10% and most preferably from 2 to 8% by weight of the composition.

The water purification composition of the invention comprises an adsorbent uniquely selected to give the desired properties. The adsorbent is a water insoluble oxide, hydroxide or oxo-hydroxide of titanium, zirconium, iron, copper or zinc. Especially preferred adsorbents are water insoluble oxide, hydroxide or oxo-hydroxide of titanium, and iron. Suitable adsorbents are titanium dioxide, zirconium oxide, iron oxide, copper oxide, zinc oxide, iron oxo-hydroxides, titanium oxo-hydroxides, zirconium oxo-hydroxides or combinations of these adsorbents. The more preferred adsorbents are titanium di oxide, titanium oxo-hydroxide, iron oxide, iron hydroxide or iron oxo-hydroxide, most preferred adsorbent being titanium dioxide and iron oxo-hydroxide. Preferred amounts of adsorbent is in the range of 5 to 70%, more preferably 10 to 50%, most preferably 15 to 30% by weight of the composition.

The composition of the invention comprises a biocide which is a halogen compound. More preferred halogen compounds are those of chlorine or iodine, more preferably those of chlorine. Suitable chlorine compounds are inorganic compounds like sodium hypochlorite, calcium hypochlorites, chlorine dioxide, or chloramines, or organic chlorine compounds like sodium dichloro-isocyanurates, or trichloroisocyanuric acid. The biocide is preferably present in an amount in the range of from 1 to 20%, more preferably from about 2 to 12% by weight of the composition. Most preferred biocide is calcium hypochlorite. The present inventors have found that not all biocides are effective in meeting the objects of the present invention. Several conventional biocides like quarternary ammonium compounds, triazine, glutaraldehyde, isothiazoline, organo tin compounds, carbamates, methylene thio cyanate were used and although they were useful for microbiological removal they had poor efficacy with respect to meeting arsenic removal. Thus the invention is especially suitable for removal of Arsenic, especially when the water is heavily contaminated with arsenic compounds which are in the As(III) form, which has always been difficult to achieve using prior art methods.

The water purification composition works best when it is packed to have a moisture content of not more than 5%, more preferably not more than 3%, and most preferably not more than 2% by weight of the composition.

The purification action of the composition of the invention can be attained at the pH of the raw water available. As a preferred aspect, the pH of the composition may be adjusted to the desired range by including a buffering agent in the composition. Suitable buffering agents are calcium oxide, sodium carbonate or sodium bicarbonate. The buffering agent when present is included in an amount in the range of 0.5 to 10% by weight of the composition.

The water purification composition may optionally comprise a co-adsorbent. The co-adsorbent is preferably a material which is capable of adsorbing high levels of water and organic or inorganic compounds. Suitable co-adsorbent is a clay. Examples of clay include Montmorillonite clay (dioctheydral smectite clay), Laponite, Hectorite, Nontronite, Saponite, Volkonsite, Sauconite, Beidellite, Allevarlite, Illite, Halloysite, Attapulgite, Mordenite, Kaolines, and Bentonite. A highly preferred clay as per this invention is Bentonite clay. When included, co-adsorbents are present in an amount in the range of 5 to 75%, more preferably from about 10 to 60% by weight of the composition.

According to a preferred aspect of the invention the water purification composition is delivered as a two-component system. The two-component system comprises a first portion and a second portion which are kept spatially separated. The first portion comprises the biocide and the second portion comprises the flocculating agent and the coagulating agent. A further preferred aspect has the adsorbent present in the second portion of the two-component system. When delivered as a two-component system, it is preferred that the first portion comprises less than 5 % moisture by weight of said first portion. In the two component system, the co-adsorbent, if present, may be included in both the first portion and the second portion or may be present in any one of the portions.

A further preferred aspect of the invention provides for the second portion to comprise a biocide quencher which is capable of reacting with the biocide to render it safe and aesthetically acceptable for human consumption. Suitable quenchers are sodium thiosulphate and ascorbic acid. The quencher is preferably present in an amount in the range of 1 to 20% by weight of the second portion, more preferably from about 2 to 12% by weight of the second portion.

The solid form is the most suitable form of the composition of the invention. Suitable solid forms include the powder, granule and tablet forms, most preferred form being the powder form. When delivered as a two-component system, the most preferred form is the powder form in both the first portion and the second portion.

The water purification composition of the invention is preferably delivered in amounts in the range of 0.5 to 10 grams more preferably in the range of 1 to 5 grams. These are usually added to 5 to 20 litres of water. When delivered as a two component system, suitable weight of the first portion is 0.01 to 5 grams, more preferably 0.1 to 1 gram and suitable weights of the second portion is 0.5 to 10 grams.

The water purification composition of the invention may be delivered to the consumer in any known suitable packaging form. When formed as tablets, the packaging may be metallised laminate or blister packing. When formed as powders, suitable packaging is metallised laminate. However the metallised laminate packaging has to be such that the halogenated compounds that usually react with metals are kept separated from the metal part of the laminate by use of suitable polymeric layers on the metal layer.

According to another aspect of the invention there is provided a process for purifying water comprising the steps of (i) mixing the composition of the invention with the water to be purified and (ii) separating the flocculated mass from the mixture.

When the product is configured as two component system, a suitable process comprises the sequential steps of mixing the composition of the first portion with the water to be purified; followed by the step of mixing the composition of the second portion and then separating the flocculated mass from the mixture. The first portion is usually mixed for a period of time from 0.5 to 5 minutes and the water is then allowed to stand for a time period of 2 to 10 mins, after which the second portion is added. The mixture is then mixed for a period of time from 0.5 to 5 minutes and again allowed to stand for 2 to 10 mins. The flocculated mass is then allowed to settle down and then separated from the mixture usually by filtration or decantation. A simple cloth may be used for filtration.

The process of the invention is especially suited for purifying water which contains arsenic. In contaminated areas, average arsenic concentration in raw water is around 300 ppb by weight. By using the process of the invention, it is possible to get purified water having an arsenic content as low as less than 10 ppb by weight of the purified water.

The invention will now be illustrated by the following non-limiting examples.

### EXAMPLES

Preparation of test water: 10 litres of R. O water (reverse osmosis purified water) was taken and 15 g of sea salt, 0.025 g humic acid and 1.5 g fine dust (Arizona test dust) was added to it. Total dissolved salts was less than 50 ppm. Arsenic compounds either sodium arsenate (Na₂HAsO₄.7H₂O) in which arsenic is in the As (V) form or Sodium arsenite (NaAsO₂) in which arsenic is in the As (III) state was added to the test water, as desired.

### Determination of arsenic content

Inductively coupled plasma-optical emission spectroscopy (ICP-OES) (Varian-Vista-PRO) was used to measure total arsenic concentration (>50 ppb) in the solution. The total arsenic concentrations lower than 50 ppb were analyzed by inductively coupled plasma-mass spectrometry (ICP-MS) (Eldrin 9000). In both the analytical methods the samples were injected in the machines without any pre-concentration or pre-dilution and the total arsenic concentrations were measured.

### Comparative Example - A

A test water containing 300 ppb of arsenic from sodium arsenate (Arsenic (V) form) was used. The process of purification was as follows:

Purification process: 10 litres of test water was taken in a bucket and the composition as shown in Table-1 was added to the test water and stirred for one minute after which the water was left to stay for five minutes. The flocculated mass was then filtered through a layered cloth. The arsenic content of the purified water was measured and the result is summarized in Table- 1.

### Comparative Example - B

A test water containing 300 ppb of arsenic from sodium arsenite (Arsenic (III) form) was used. The process of purification was as used for Comparative Example - A. The arsenic content of the purified water was measured and the result is summarized in Table-1.

### Example - 1

A water purification composition as shown in Table-1 was used for purification of water. The composition was a two component system with the first component having calcium hypochlorite and the second component having polyaluminium chloride, polyacrylamide and titanium dioxide. The process of purification was as follows.

Purification process: 10 litres of the test water was taken in a bucket and the composition as shown in Table-1 was added to the test water and stirred for one minute after which the water was left to stay for five minutes. After this the second component was added and stirred for one minute after which it was allowed to stay for five minutes. The flocculated mass was then filtered through a layered cloth. The arsenic content of the purified water was measured and the result is summarized in Table - 1.

### Example - 2

A composition as per Example-1 was used. The test water was similar to that used in Example -1 except that the test water contained 150 ppb of sodium arsenite and 150 ppb of sodium arsenate which is generally encountered in ground water contaminated with arsenic. The arsenic content of the purified water was measured and the result is summarized in Table - 1.

### Example - 3

A water purification composition similar to Example-1 was used, as shown in Table-1, except that iron oxide was used instead of titanium dioxide. The composition was prepared as a two component system.

**Table-1**

| Example | Comparative Example - A | Comparative Example - B | Example-1 | Example- 2 | Example- 3 |
|---|---|---|---|---|---|
| Calcium hypochlorite, g | - | - | 0.15 | 0.15 | 0.15 |
| Polyaluminium chloride, g | 0.60 | 0.60 | 0.60 | 0.60 | 0.60 |
| Polyacrylamide, g | 0.08 | 0.08 | 0.08 | 0.08 | 0.08 |
| Adsorbent | TiO₂ | TiO₂ | TiO₂ | TiO₂ | Iron oxo-hydroxide |
| Adsorbent, g | 0.50 | 0.50 | 0.50 | 0.50 | 0.50 |
| Form of arsenic in test water | As(V) | As(III) | As(III) | As(III) + As (V) in 1:1 wt ratio | As(III) |
| ppb arsenic in purified water | 5 | 100 | 5 | 5 | 10 |

The data in Table- 1 indicates that using composition as per prior art (Comparative Example A), the standards of removal of As (V) can be achieved but it is not possible to meet the purification standard for As (III) (Comparative Example - B). However using the compositions as per the present invention (Examples 1 - 3), it is possible to ensure removal of Arsenic in the As (III) form alone or as a mixture of As (III) and As (V) forms.

### Biocidal efficacy

A test water as used for Example -1 was prepared and in addition micro-organisms viz. cyst, bacteria and virus at the concentration as shown in Table-2 was added to it. The test water was purified as per the process used for Example -1. The amount of micro-organisms in the purified water was determined and the result is summarized in Table-2. The method used to measure the amount of the various microorganisms in water is described in detail in the publication "Tropical Medicine and International Health, volume 11 no 9 pp 1399-1405 September 2006, in article titled "'Microbiological performance of a water treatment unit designed for household use in developing countries", by Thomas Clasen, Suresh Nadakatti and Shashikala Menon.

**Table-2**

| **Microbes** | **Input Conc.** | **Output Conc.** | **Log reduction** |
|---|---|---|---|
| Bacteria (*E-coli*) | 7x10⁶ / 100 mL | <10 | 6.80 |
| | | | |
| Polio Virus | 10^{4.10} pfu / 100 µL | <10 | 4.10 |
| | | | |
| Cysts (irradiated) | 5x10⁴ / L | 50/L | 3.00 |

The data indicates that the composition as per the invention is capable of purifying water which contains harmful microorganisms to a high degree of purification required for maintenance of good health in people consuming the water viz. the composition ensures at least 6 log removal of bacteria, 4 log removal of virus and 3 log removal of cyst.

Several prior art compositions (Comparative Examples C to F) and compositions outside the scope of the invention (Comparative Example G) were tried as shown in Table - 3. The test water was as used for Example - 1.

### Comparative Example-C

The water purification composition as shown in Table-3 was prepared as a one component system and the process as per Comparative Example - A was used for purifying the test water.

### Comparative Example- D

The composition as shown in Table-3 as a two component system was prepared. The test water was purified as per the process used in Example-1.

### Comparative Example -E

A composition as shown in Table-3 was prepared as a one component system and a process as per comparative Example - A was used for purifying the test water.

### Comparative Example - F

A composition as shown in Table-3 was prepared as a one component system. The test water was purified as per the process used in Comparative Example - A.

### Comparative Example - G

The composition as shown in Table-3 as a two component system was prepared. The test water was purified as per the process used in Example-1.

The results of the experiments (Comparative Examples C to G) in terms of the Arsenic content in the purified water are summarized in Table - 3.

**Table-3**

| Example | Comp Ex- C | Comp Ex- D | Comp Ex-E | Comp Ex- F | Comp Ex-G |
|---|---|---|---|---|---|
| Biocide | CaHypo | CaHypo | CaHypo | CaHypo | CPB |
| Biocide, g | - | 0.15 | - | - | 0.15 |
| Polyaluminium chloride, g | 0.60 | 0.60 | - | 0.60 | 0.60 |
| Polyacrylamide, g | 0.08 | 0.08 | - | 0.08 | 0.08 |
| Adsorbent | - | - | TiO2 | Fe₂O₃ | TiO2 |
| Adsorbent, g | - | - | 0.50 | 0.50 | 0.50 |
| ppb arsenic in purified water | 150 | 50 | 150 | 120 | 100 |

| | | | | | |
|---|---|---|---|---|---|
| CaHypo: Calcium hypochlorite CPB: Cetyl pyridinium bromide | | | | | |

The data in Table-3 indicates that compositions as per the prior art (Comparative Examples C to F) is not able to meet the removal criterion of arsenic. Further use of any conventional biocide (Comparative Example - G) alone is not sufficient to meet the removal criterion of arsenic.

### Comparative Examples- H to K

Experiments were conducted using compositions as shown in Table-4, where various other commonly known adsorbents were used. The process used was similar to that used for Example-1. The result on the Arsenic content in the purified water is shown in Table-4. The result of Example-1 is reproduced for comparison.

**Table-4**

| Example | Ex-1 | Comparative Example - H | Comparative Example - I | Comparative Example- J | Comparative Example-K |
|---|---|---|---|---|---|
| Calcium hypochlorite, g | 0.15 | 0.15 | 0.15 | 0.15 | 0.15 |
| Polyaluminium chloride, g | 0.60 | 0.60 | 0.60 | 0.60 | 0.60 |
| Polyacrylamide, g | 0.08 | 0.08 | 0.08 | 0.08 | 0.08 |
| Adsorbent | Titanium di oxide | Bentonite | Activated Carbon | Talc | Zeolite |
| Adsorbent, g | 0.50 | 0.50 | 0.50 | 0.50 | 0.50 |
| ppb arsenic in purified water | 5 | 50 | 50 | 50 | 50 |

The data in table-4 indicates that only use of a selective adsorbent in the composition of the invention provides for the synergistic benefit in arsenic removal while use of conventional adsorbents do not provide this benefit.

## Claims

1. A water purification composition comprising
(e) a coagulating agent which is a water soluble inorganic metal salt having trivalent cation;
(f) a flocculating agent which is a high molecular weight water soluble polymer;
(g) an adsorbent which is a water insoluble oxide, hydroxide or oxo-hydroxide of titanium, zirconium, iron, copper or zinc; and
(h) a biocide which is a halogen compound.

2. A water purification composition as claimed in claim 1 wherein the halogen is chlorine or iodine.

3. A water purification composition as claimed in claim 1 or claim 2 wherein the halogen compound is calcium hypochlorite.

4. A water purification composition as claimed in any one of the preceding claims wherein the biocide is present in an amount in the range of 1 to 20% by weight of the composition.

5. A water purification composition as claimed in any one of the preceding claims wherein the adsorbent is titanium dioxide or Iron oxo- hydroxide.

6. A water purification composition as claimed in any one of the preceding claims wherein the adsorbent is present in an amount in the range of 5 to 70% by weight of the composition.

7. A water purification composition as claimed in any one of the preceding claims wherein the coagulating agent is polyaluminium chloride, aluminium sulfate or ferric sulfate.

8. A water purification composition as claimed in any one of the preceding claims wherein the coagulating agent is present in an amount in the range of 5 to 50% by weight of the composition.

9. A water purification composition as claimed in any one of the preceding claims wherein the flocculating agent is anionically modified polyacrylamide.

10. A water purification composition as claimed in any one of the preceding claims wherein the flocculating agent is present in an amount in the range of 0.5 to 15% by weight of the composition.

11. A water purification composition as claimed in any one of the preceding claims comprising a co-adsorbent which is capable of adsorbing high levels of water and organic or inorganic compounds.

12. A water purification composition as claimed in claim 11 wherein the co-adsorbent is bentonite clay.

13. A water purification composition as claimed in claim 11 or 12 wherein the co-adsorbent is present in an amount in the range of 5 to 75% by weight of the composition.

14. A water purification composition as claimed in any one of the preceding claims comprising a buffering agent capable of maintaining the pH in the range of 6 to 8.5 when the composition is dissolved/dispersed in water.

15. A water purification composition as claimed in claim 14 wherein the buffering agent is chosen from calcium oxide, sodium carbonate or sodium bicarbonate.

16. A water purification composition as claimed in claim 14 or 15 wherein the buffering agent is present in an amount in the range of 1 to 10% by weight of the composition.

17. A water purification composition as claimed in any one of the preceding claims comprising two portions which are spatially separated wherein the first portion comprises the biocide and the second portion comprises the flocculating agent and the coagulating agent.

18. A water purification composition as claimed in claim 17 wherein the second portion comprises said adsorbent.

19. A water purification composition as claimed in claim 17 or 18 wherein said first portion comprises less than 5 % moisture by weight of said first portion.

20. A water purification composition as claimed in any one of the preceding claims 17 to 19 wherein the second portion comprises a biocide quencher which is capable of reacting with the biocide to render it safe for human consumption.

21. A water purification composition as claimed in claim 20 wherein said quencher is sodium thiosulphate or ascorbic acid.

22. A process for purifying water comprising the steps of
i. mixing the composition as claimed in any one of claims 1 to 16 with the water to be purified and
ii. separating the flocculated mass from the mixture.

23. A process for purifying water comprising the sequential steps of
i. mixing the composition of the first portion of any one of the preceding claims 17 to 21 with the water to be purified;
ii. mixing the composition of said second portion of any one of the preceding claims 17 to 21 and
iii. separating the flocculated mass from the mixture.

24. Use of a composition according to any one of claims 1 to 21 for the reduction of arsenic in drinking water to a level of less than 10 ppb in the purified water

25. Use of a composition according to any one of claims 1 to 21 for the reduction of bacteria in drinking water, wherein a 6 log removal of bacteria is obtained.

26. Use of a composition according to any one of claims 1 to 21 for the reduction of virus in drinking water, wherein a 4 log removal of virus is obtained.

27. Use of a composition according to any one of claims 1 to 21 for the reduction of cysts in drinking water, wherein a 3 log removal of cysts is obtained.

## Patentansprüche

1. Wasserreinigungszusammensetzung, umfassend
(e) ein Koagulationsmittel, welches ein wasserlösliches anorganisches Metallsalz mit einem trivalenten Kation ist;
(f) ein Flockungsmittel, welches ein wasserlösliches Polymer mit hohem Molekulargewicht ist;
(g) ein Adsorbens, welches ein wasserunlösliches Oxid, Hydroxid oder Oxohydroxid von Titan, Zirkonium, Eisen, Kupfer oder Zink ist, und
(h) ein Biozid, welches eine Halogenverbindung ist.

2. Wasserreinigungszusammensetzung, wie sie in Anspruch 1 beansprucht ist, in der das Halogen Chlor oder Iod ist.

3. Wasserreinigungszusammensetzung, wie sie in Anspruch 1 oder Anspruch 2 beansprucht ist, in der die Halogenverbindung Calciumhypochlorit ist.

4. Wasserreinigungszusammensetzung, wie sie in einem der vorangehenden Ansprüche beansprucht ist, in der das Biozid in einer Menge im Bereich von 1 bis 20 Gewichts-% der Zusammensetzung vorhanden ist.

5. Wasserreinigungszusammensetzung, wie sie in einem der vorangehenden Ansprüche beansprucht ist, in der das Adsorbens Titandioxid oder Eisenoxohydroxid ist.

6. Wasserreinigungszusammensetzung, wie sie in einem der vorangehenden Ansprüche beansprucht ist, in der das Adsorbens in einer Menge im Bereich von 5 bis 70 Gewichts-% der Zusammensetzung vorliegt.

7. Wasserreinigungszusammensetzung, wie sie in einem der vorangehenden Ansprüche beansprucht ist, in der das Koagulationsmittel ein Polyaluminiumchlorid, Aluminiumsulfat oder Eisen(III)-sulfat ist.

8. Wasserreinigungszusammensetzung, wie sie in einem der vorangehenden Ansprüche beansprucht ist, in der das Koagulationsmittel in einer Menge im Bereich von 5 bis 50 Gewichts-% der Zusammensetzung vorhanden ist.

9. Wasserreinigungszusammensetzung, wie sie in einem der vorangehenden Ansprüche beansprucht ist, in der das Flockungsmittel anionisch modifiziertes Polyacrylamid ist.

10. Wasserreinigungszusammensetzung, wie sie in einem der vorangehenden Ansprüche beansprucht ist, in der das Flockungsmittel in einer Menge im Bereich von 0,5 bis 15 Gewichts-% der Zusammensetzung vorhanden ist.

11. Wasserreinigungszusammensetzung, wie sie in einem der vorangehenden Ansprüche beansprucht ist, die ein Co-Adsorbens umfasst, das fähig ist, hohe Konzentrationen an Wasser und organischen oder anorganischen Verbindungen zu adsorbieren.

12. Wasserreinigungszusammensetzung, wie sie in Anspruch 11 beansprucht ist, in der das Co-Adsorbens Bentonit-Ton ist.

13. Wasserreinigungszusammensetzung, wie sie in Anspruch 11 oder 12 beansprucht ist, in der das Co-Adsorbens in einer Menge im Bereich von 5 bis 75 Gewichts-% der Zusammensetzung vorhanden ist.

14. Wasserreinigungszusammensetzung, wie sie in einem der vorangehenden Ansprüche beansprucht ist, die ein Puffermittel umfasst, das fähig ist, den pH im Bereich von 6 is 8,5 zu halten, wenn die Zusammensetzung in Wasser gelöst/dispergiert ist.

15. Wasserreinigungszusammensetzung, wie sie in Anspruch 14 beansprucht ist, in der das Puffermittel aus Calciumoxid, Natriumcarbonat und Natriumbicarbonat ausgewählt ist.

16. Wasserreinigungszusammensetzung, wie sie in Anspruch 14 oder 15 beansprucht ist, in der das Puffermittel in einer Menge im Bereich von 1 bis 10 Gewichts-% der Zusammensetzung vorhanden ist.

17. Wasserreinigungszusammensetzung, wie sie in einem der vorangehenden Ansprüche beansprucht ist, die zwei Teile umfasst, welche räumlich getrennt sind, wobei der erste Teil das Biozid umfasst und der zweite Teil das Flockungsmittel und das Koagulationsmittel umfasst.

18. Wasserreinigungszusammensetzung, wie sie in Anspruch 17 beansprucht ist, wobei der zweite Teil das Adsorbens umfasst.

19. Wasserreinigungszusammensetzung, wie sie in Anspruch 17 oder 18 beansprucht ist, wobei der erste Teil weniger als 5 Gewichts-% Feuchtigkeit, bezogen auf den ersten Teil, umfasst.

20. Wasserreinigungszusammensetzung, wie sie in einem der vorangehenden Ansprüche 17 bis 19 beansprucht ist, wobei der zweite Teil einen Biozid-Quencher umfasst, der fähig ist, mit dem Biozid zu reagieren, um es für den menschlichen Verzehr sicher zu machen.

21. Wasserreinigungszusammensetzung, wie sie in Anspruch 20 beansprucht ist, wobei der Quencher Natriumthiosulfat oder Ascorbinsäure ist.

22. Verfahren zur Reinigung von Wasser, umfassend die Schritte
i. Mischen der Zusammensetzung, wie sie in einem der Ansprüche 1 bis 16 beansprucht ist, mit dem zu reinigenden Wasser und
ii. Abtrennen der ausgeflockten Masse von dem Gemisch.

23. Verfahren zur Reinigung von Wasser, umfassend die aufeinander folgenden Schritte
i. Mischen der Zusammensetzung des ersten Teils gemäß einem der Ansprüche 17 bis 21 mit dem zu reinigenden Wasser;
ii. Mischen der Zusammensetzung des zweiten Teils gemäß einem der vorangehenden Ansprüche 17 bis 21 und
iii. Abtrennen der ausgeflockten Masse von dem Gemisch.

24. Verwendung einer Zusammensetzung gemäß einem der Ansprüche 1 bis 21 für die Verringerung von Arsen in Trinkwasser auf eine Konzentration von weniger als 10 ppb im gereinigten Wasser.

25. Verwendung einer Zusammensetzung gemäß einem der Ansprüche 1 bis 21 für die Verringerung von Bakterien in Trinkwasser, wobei eine 6 log-Entfernung von Bakterien erhalten wird.

26. Verwendung einer Zusammensetzung gemäß einem der Ansprüche 1 bis 21 für die Verringerung von Viren in Trinkwasser, wobei eine 4 log-Entfernung von Viren erhalten wird.

27. Verwendung einer Zusammensetzung gemäß einem der Ansprüche 1 bis 21 für die Verringerung von Zysten in Trinkwasser, wobei eine 3 log-Entfernung von Zysten erhalten wird.

## Revendications

1. Composition de purification d'eau comprenant
(e) un agent coagulant qui est un sel métallique inorganique soluble dans l'eau possédant un cation trivalent ;
(f) un agent floculant qui est un polymère soluble dans l'eau de haut poids moléculaire ;
(g) un adsorbant qui est un oxyde, hydroxyde ou oxo-hydroxyde de titane, de zirconium, de fer, de cuivre ou de zinc, insoluble dans l'eau ; et
(h) un biocide qui est un composé halogéné.

2. Composition de purification d'eau selon la revendication 1 dans laquelle l'halogène est le chlore ou l'iode.

3. Composition de purification d'eau selon la revendication 1 ou la revendication 2 dans laquelle le composé halogéné est l'hypochlorite de calcium.

4. Composition de purification d'eau selon l'une quelconque des revendications précédentes dans laquelle le biocide est présent en une quantité comprise entre 1 et 20 % en poids de la composition.

5. Composition de purification d'eau selon l'une quelconque des revendications précédentes dans laquelle l'adsorbant est le dioxyde de titane ou l'oxo-hydroxyde de fer.

6. Composition de purification d'eau selon l'une quelconque des revendications précédentes dans laquelle l'adsorbant est présent en une quantité comprise entre 5 et 70 % en poids de la composition.

7. Composition de purification d'eau selon l'une quelconque des revendications précédentes dans laquelle l'agent coagulant est le polychlorure d'aluminium, le sulfate d'aluminium ou le sulfate ferrique.

8. Composition de purification d'eau selon l'une quelconque des revendications précédentes dans laquelle l'agent coagulant est présent en une quantité comprise entre 5 et 50 % en poids de la composition.

9. Composition de purification d'eau selon l'une quelconque des revendications précédentes dans laquelle l'agent floculant est un polyacrylamide ayant subi une modification anionique.

10. Composition de purification d'eau selon l'une quelconque des revendications précédentes dans laquelle l'agent floculant est présent en une quantité comprise entre 0,5 et 15 % en poids de la composition.

11. Composition de purification d'eau selon l'une quelconque des revendications précédentes comprenant un co-adsorbant qui est capable d'adsorber des quantités élevées d'eau et de composés organiques ou inorganiques.

12. Composition de purification d'eau selon la revendication 11 dans laquelle le co-adsorbant est un argile bentonitique.

13. Composition de purification d'eau selon la revendication 11 ou 12 dans laquelle le co-adsorbant est présent en une quantité comprise entre 5 et 75 % en poids de la composition.

14. Composition de purification d'eau selon l'une quelconque des revendications précédentes comprenant un agent tampon capable de maintenir le pH dans la plage de 6 à 8,5 lorsque la composition est dissoute/dispersée dans l'eau.

15. Composition de purification d'eau selon la revendication 14 dans laquelle l'agent tampon est choisi parmi l'oxyde de calcium, le carbonate de sodium ou le bicarbonate de sodium.

16. Composition de purification d'eau selon la revendication 14 ou 15 dans laquelle l'agent tampon est présent en une quantité comprise entre 1 et 10 % en poids de la composition.

17. Composition de purification d'eau selon l'une quelconque des revendications précédentes comprenant deux parties qui sont spatialement séparées, la première partie comprenant le biocide et la seconde partie comprenant l'agent floculant et l'agent coagulant.

18. Composition de purification d'eau selon la revendication 17 dans laquelle la seconde partie comprend ledit adsorbant.

19. Composition de purification d'eau selon la revendication 17 ou 18 dans laquelle ladite première partie comprend moins de 5 % d'humidité en poids de ladite première partie.

20. Composition de purification d'eau selon l'une quelconque des revendications 17 à 19 précédentes dans laquelle la seconde partie comprend un inhibiteur de biocide qui est capable de réagir avec le biocide pour le rendre sans danger pour la consommation humaine.

21. Composition de purification d'eau selon la revendication 20 dans laquelle ledit inhibiteur est le thiosulfate de sodium ou l'acide ascorbique.

22. Procédé de purification d'eau comprenant les étapes consistant à
i. mélanger la composition selon l'une quelconque des revendications 1 à 16 avec l'eau devant être purifiée et
ii. séparer la masse floculée du mélange.

23. Procédé de purification d'eau comprenant les étapes successives consistant à
i. mélanger la composition de la première partie selon l'une quelconque des revendications 17 à 21 précédentes avec l'eau devant être purifiée ;
ii. mélanger la composition de ladite seconde partie selon l'une quelconque des revendications 17 à 21 précédentes et
iii. séparer la masse floculée du mélange.

24. Utilisation d'une composition selon l'une quelconque des revendications 1 à 21 pour la réduction de l'arsenic dans l'eau de boisson à un niveau inférieur à 10 ppb dans l'eau purifiée.

25. Utilisation d'une composition selon l'une quelconque des revendications 1 à 21 pour la réduction des bactéries dans l'eau de boisson, dans laquelle on obtient une élimination des bactéries de 6 log.

26. Utilisation d'une composition selon l'une quelconque des revendications 1 à 21 pour la réduction des virus dans l'eau de boisson, dans laquelle on obtient une élimination des virus de 4 log.

27. Utilisation d'une composition selon l'une quelconque des revendications 1 à 21 pour la réduction des kystes dans l'eau de boisson, dans laquelle on obtient une élimination des kystes de 3 log.
